# EUROPEAN PATENT SPECIFICATION

(11) **EP 4 018 963 B1**
(45) Date of publication and mention of the grant of the patent: **07.05.2025**
(21) Application number: 19946186.4
(22) Date of filing: 25.12.2019
(51) Int. Cl.: A61C 7/00, A61C 7/36

(54) **AUXILIARY ORTHODONTIC DEVICE FOR SHELL-LIKE DENTAL APPLIANCE**
ORTHODONTISCHE HILFSPANGE FÜR EIN SCHALENARTIGES DENTALGERÄT
DISPOSITIF ORTHODONTIQUE AUXILIAIRE POUR APPAREIL DENTAIRE DE TYPE COQUE

(30) Priority: 20.09.2019 CN 201921570502 U
(43) Date of publication of application: 29.06.2022
(73) Proprietor: Shanghai Smartee Denti-Technology Co., Ltd., Shanghai 200120 (CN)
(72) Inventor: ZHUANG, Huimin, Shanghai 200120 (CN); YAO, Junfeng, Shanghai 200120 (CN)
(74) Representative: Novagraaf International SA
(86) International application number: PCT/CN2019/128220
(87) International publication number: WO 2021/051700

(56) References cited:
- EP-A1- 3 427 704
- WO-A1-2007/139485
- CN-A- 106 031 661
- CN-A- 110 063 802
- CN-A- 110 141 380
- CN-U- 205 683 156
- US-A1- 2006 019 213
- US-A1- 2018 110 594

## Description

### TECHNICAL FIELD

Some embodiments of the present disclosure belong to the field of medical devices, and in particular, to an auxiliary orthodontic device for a shell-like dental appliance, an orthodontic appliance and an orthodontic system.

### BACKGROUND

When patients undergo invisible orthodontics treatment, they need to cooperate with auxiliary devices such as a traction device to achieve an orthodontic objective.

US 2006/019213A discloses an attachable orthodontic hook system, the hook is designed for the reception of orthodontic elastics used to correct the patient's bite. The hook is comprised of a predestal back, a locking longitudinal shaft, and a single button hook or a button hook with accessory hooks. However, the hook system is difficult to cooperate with the traction device such as extra-maxillary device for orthodontic treatment.

### SUMMARY

The invention is set out in the appended set of claims.

An objective of some embodiments of the present disclosure is to provide an auxiliary orthodontic device for a shell-like dental appliance, which enables a shell-like dental appliance and the auxiliary device to be assembled together easily and stably, and a corresponding auxiliary device can be selected and used based on orthodontic requirements, thereby achieving a corresponding orthodontic function.

Technical solutions provided in some embodiments of the present disclosure are as follows.

Some embodiments of the present disclosure provide an auxiliary orthodontic device for a shell-like dental appliance, the auxiliary orthodontic device including:
a functional component, and
a retaining component provided separately from the functional component;
where the retaining component is connected to the functional component, at least one of the functional component and the retaining component passes through a shell-like dental appliance; the functional component is retained on the shell-like dental appliance, and the functional component is provided on an outer surface of the shell-like dental appliance. Herein the shell-like dental appliance wraps teeth, a surface in contact with the teeth is defined as an inner surface, and another surface opposite to the inner surface is defined as an outer surface.

A corresponding auxiliary function of the auxiliary orthodontic device is achieved through the functional component, and the retaining component is connected to the functional component through the shell-like dental appliance, or the functional component passes through the shell-like dental appliance and is connected to the retaining component. Such a separated connection manner enables that cooperation between the auxiliary orthodontic device and the shell-like dental appliance is more stable, that is, the shell-like dental appliance is partially inserted into the auxiliary device, so that a connection between the two is stable.

Further, in some embodiments, the functional component is a traction member with a hooking function, a tongue crib for improving tongue habits, or a component for opening occlusion. The functional component can be correspondingly selected according to clinical requirements, to adapt to different orthodontic requirements.

Further, in some embodiments, when the functional component is the traction member with the hooking function, the traction member includes a traction rod, a limiting member and a base, the traction rod is disposed between the limiting member and the base, the base is disposed adjacent to a labial side of the shell-like dental appliance, an end portion of the traction rod connected to the base is perpendicular to a tooth surface of labial side, one end of the traction rod away from the base is a free end, and the limiting member is disposed at the free end of the traction rod, and forms a limiting slot with the traction rod. The traction member cooperates with an extramaxillary traction device or an intramaxillary traction device to achieve traction, the base is adjacent to the shell-like dental appliance, so that the base can provide support for the traction rod on the base. And the end portion of the traction rod is disposed perpendicular to the tooth surface of labial side, which is convenient to generate a corresponding traction force during traction, thereby avoiding an unexpected movement caused by a tilt of the traction force. The limiting member and the traction rod form a limiting slot, and the limiting slot is connected to an elastic member to generate a hooking force for connecting to the extramaxillary traction device or the intramaxillary traction device.

Further, in some embodiments, the traction rod is of a hook-like structure disposed at a specific angle, a connection end between the traction rod and the base is perpendicular to the tooth surface of labial side, and the free end of the traction rod is disposed at a specific angle with the tooth surface of labial side. The traction rod is of the hook-like structure disposed at a specific angle, the hook-like structure may generate a hooking force for connecting to an extramaxillary traction device or an intramaxillary traction device to implement traction.

With the auxiliary orthodontic device of the invention, a surface of the functional component adjacent to the labial side of the shell-like dental appliance is a curved surface consistent with a dental arch curve of the labial side. The surface of the functional component adjacent to the labial side of the shell-like dental appliance is closely attached to the dental arch curve of the labial side, so that wearing is more comfortable.

Further, in some embodiments, a first matching member connected to the retaining component is further disposed at a position of the functional component adjacent to the labial side of the shell-like dental appliance. The functional component is connected to the retaining component through the first matching member.

Further, in some embodiments, the retaining component includes a fixing member and a connecting member, one end of the connecting member is connected to the fixing member, and another end of the connecting member is provided with a second matching member connected to the first matching member. The fixing member retains the retaining component on one side of the shell-like dental appliance, and is connected to the functional component through engagement between the second matching member and the first matching member, so that the functional component is fixed on another side of the shell-like dental appliance.

Further, in some embodiments, the first matching member and the second matching member are connected in a manner of a male-female matching connection. The male-female matching connection has advantages of a simple structure and a reliable connection.

Further, in some embodiments, the male-female matching connection is a threaded connection, an insert connection, a tenon-and-mortise connection, a magnetic attraction connection or an adhesion connection.

Further, in some embodiments, when the functional component is a traction member with a hooking function, the component for opening occlusion is a jaw pad component or a flat guide component. The functional component is set as the jaw pad component or the flat guide component, and is configured for occlusal reconstruction of upper and lower jaws or a vertical movement of a lower jaw to open posterior tooth occlusion.

Further, in some embodiments, a cross section of the retaining component passing through the shell-like dental appliance is of a non-circular structure that prevents rotation relative to the shell-like dental appliance, and the cross section of the retaining component passing through the shell-like dental appliance is matched with an opening provided on the shell-like dental appliance. Alternatively, a cross section of the functional component passing through the shell-like dental appliance is a non-circular structure that prevents rotation relative to the shell-like dental appliance, and the cross section of the functional component passing through the shell-like dental appliance is matched with an opening provided on the shell-like dental appliance. When the auxiliary device is used for orthodontic treatment, there are orthodontic requirements for a direction of disposing the functional component disposed on the auxiliary device. Therefore, after cooperating with the shell-like dental appliance, the auxiliary device cannot generate a relative movement or rotation, thereby affecting an orthodontic effect. Therefore, a portion of the retaining component or the functional component passing through the shell-like dental appliance is a non-circular structure, and when the non-circular structure is engaged with the shell-like dental appliance, positions of the two are relatively stable and do not move or rotate.

Further, some embodiments of the present disclosure further provide a shell-like dental appliance, including: a shell-like dental appliance body and the auxiliary orthodontic device for a shell-like dental appliance described above.

Further, some embodiments of the present disclosure further provide a tooth orthodontic system, including: a plurality of orthodontic appliances, where at least one of the orthodontic appliances is the shell-like dental appliance described above.

Compared to existing technologies, the present disclosure at least has following advantages.

The auxiliary orthodontic device for a shell-like dental appliance provided by some embodiments of the present disclosure, which is provided with a functional component and a retaining component, here the functional component is set to have a corresponding auxiliary orthodontic function, and the retaining component is set to have an effect of fixing the auxiliary orthodontic device and the shell-like dental appliance. The retaining component passes through the shell-like dental appliance to be connected to the functional component, or the functional component passes through the shell-like dental appliance to be connected to the retaining component. Such a separated type connection manner enables that cooperation between the auxiliary orthodontic device and the shell-like dental appliance is more stable, that is, the shell-like dental appliance is partially inserted into the auxiliary device, so that a connection between the two is stable. When engaged with the shell-like dental appliance in use, the auxiliary orthodontic device can achieve the auxiliary orthodontic function more precisely without affecting an area of corresponding teeth wrapped by the shell-like dental appliance, thereby not affecting an overall orthodontic effect of the shell-like dental appliance. When being disposed on the shell-like dental appliance to achieve the corresponding auxiliary orthodontic function, the auxiliary orthodontic device performs orthodontic treatment by using an overall force of the overall shell-like dental appliance and the corresponding teeth, to achieve the orthodontic treatment of overall dentition, and it avoids that the auxiliary orthodontic device is disposed on a single tooth, resulting in an unexpected orthodontic effect on an action of the single tooth. The auxiliary orthodontic device may be prepared through pre-forming, and is applicable to large-scale production, and a corresponding auxiliary orthodontic function may be added based on orthodontic requirements, so as to avoid errors caused by a manual operation to affect the orthodontic effect. In addition, the auxiliary orthodontic device is made of a material that can be applied in a mouth, and is engaged with the shell-like dental appliance by physical connection. This cannot cause uncertainty in use by a change of a material characteristic due to reprocessing.

### BRIEF DESCRIPTION OF THE DRAWINGS

The foregoing characteristics, technical features, advantages and implementations are further described below in a clear and easy-to-understand manner by describing preferred implementations with reference to the accompanying drawings.
FIG. 1 is a schematic structural diagram of an auxiliary orthodontic device with a traction function according to some embodiments.
FIG. 2 is a cross-sectional view of a connection between an auxiliary orthodontic device with a traction function and a shell-like dental appliance according to some embodiments.
FIG. 3 is another cross-sectional view of a connection between an auxiliary orthodontic device with a traction function and a shell-like dental appliance according to some embodiments.
FIG. 4 is a schematic structural diagram of the auxiliary orthodontic device with the traction function in Fig. 1.
FIG. 5 is a schematic structural diagram of another auxiliary orthodontic device with a traction function according to some embodiments.
FIG. 6 is a schematic structural diagram of another auxiliary orthodontic device with a traction function according to some embodiments.
FIG. 7 is a schematic structural diagram of another auxiliary orthodontic device with a traction function according to some embodiments.
FIG. 8 is a schematic structural diagram of another auxiliary orthodontic device with a traction function according to some embodiments.
FIG. 9 is a schematic structural diagram of an auxiliary orthodontic device with a tongue crib according to some embodiments.
FIG. 10 is a schematic assembly diagram after a connection between a jaw pad component and a shell-like dental appliance body according to some embodiments.
FIG. 11 is a schematic structural diagram of a shell-like dental appliance according to some embodiments.

### DETAILED DESCRIPTION

To describe some embodiments of the present disclosure or the technical solutions in the existing technologies more clearly, specific implementations of the present disclosure are described below with reference to the accompanying drawings. Obviously, the accompanying drawings in the following descriptions are merely some embodiments of the present disclosure, and a person of ordinary skill in the art may further obtain other accompanying drawings according to the accompanying drawings without creative efforts, and thereby obtaining other implementations. To better describe the present disclosure, some embodiments of the present disclosure are described in detail below with reference to the accompanying drawings.

Currently, a combination manner of an auxiliary device and an invisible appliance is mainly includes: the auxiliary device and the invisible appliance are integrally formed, or the auxiliary device and the invisible appliance are adhered together. However, the foregoing modes have a disadvantage that the connection between the auxiliary device and the invisible appliance is unstable. Taking the traction auxiliary device as an example, traction on the appliance is mainly performed in the following four manners in the existing technologies.
① Some incisions are made at an edge of the invisible appliance to form a hookable shape, and a rubber band is directly hung on the incision to achieve an effect of traction. However, in this manner, because the continuity of the edge of the invisible appliance is destroyed, an area of teeth wrapped by the invisible appliance is reduced, which indirectly affects an orthodontic effect. Meanwhile because the rubber band directly acts on the incision, incision eversion is caused, which not only makes the invisible appliance deformed and affects the orthodontic effect, but also easily causes damage to patient's oral mucosa.
② The incision that can accommodate this traction member may be cut at the edge of the invisible appliance, so that the traction member is adhered to the teeth without contacting the invisible appliance. However, this manner reduces the overall wrapping of the invisible appliance on the teeth, and indirectly affects the orthodontic effect; and meanwhile because the traction device is adhered to a tooth surface, and is not in contact with the invisible appliance, during traction, an action site is the teeth on which the traction device is located instead of overall dentition, which may cause a movement of the teeth in an unexpected direction.
③ The appliance is molded for a second time by using a thermoforming plier. A specific manner is to form a protrusion on a surface of the invisible appliance by using the thermoforming plier, and then form a hookable slot on the protrusion for traction. However, this method requires manual operation and cannot implement large-scale production. The production efficiency is relatively low, and additionally, due to a difference in individual production, a traction deviation is generated in positions or shapes of the traction auxiliary devices formed on different invisible appliances. Meanwhile, during the forming process by the thermoforming plier, in addition to forming the protrusion, the heating will also cause heating deformation of the appliance surrounding the protrusion, resulting in surroundings of the appliance becomes thinner. In addition, this traction auxiliary device is of a cavity structure, and also has poor traction stability, thereby generating deformation during traction, which may affect the subsequent orthodontic effect.
④ The traction auxiliary device is adhered to the surface of the invisible appliance. This method uses chemical adhesion or hot-melt manner to adhere the traction device to the invisible appliance. This method has a relatively high requirement for chemical adhesives and a relatively high cost. When the hot-melt manner is used for adhesion, it is necessary to ensure that a material after hot-melting does not generate a characteristic change of the material, thereby not further generating a toxic substance that is not friendly to a human body.

All the foregoing existing manners have technical disadvantages. Therefore, it is urgent to develop a device that can be engaged with the invisible appliance to complete auxiliary orthodontic treatment, which is safe and convenient to use, and is of great significance of assisting the invisible appliance in completing a corresponding orthodontic function.

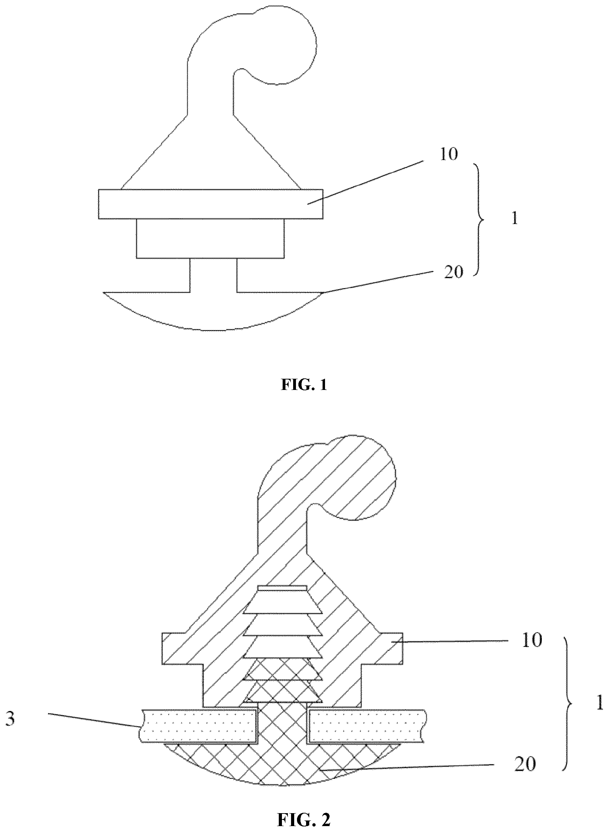

Based on this, some embodiments of the present disclosure provide an auxiliary orthodontic device for a shell-like dental appliance. Referring to FIG. 1, the auxiliary orthodontic device 1 includes a functional component 10 and a retaining component 20 provided separately from the functional component 10, the retaining component 20 is connected to the functional component 10. As shown in FIG. 2, at least one of the functional component 10 and the retaining component 20 passes through a shell-like dental appliance 3, the functional component 10 is retained on the shell-like dental appliance 3, and the functional component 10 is provided on an outer surface of the shell-like dental appliance 3. In some embodiments, the shell-like dental appliance 3 wraps teeth, a surface in contact with the teeth is defined as an inner surface, and another surface opposite to the inner surface is defined as an outer surface.

When the retaining component 20 passes through the shell-like dental appliance 3 to be connected to the functional component 10, referring to FIG. 1 and FIG. 2, specifically, a cross section of the retaining component 20 passing through the shell-like dental appliance 3 is of a non-circular structure that prevents rotation relative to the shell-like dental appliance 3, and the cross section of the retaining component 20 passing through the shell-like dental appliance 3 is matched with an opening on the shell-like dental appliance 3. For example, both are of a polygonal structure such as a rectangular structure or a triangular structure, or are of another structure for matching. When the auxiliary device is used for orthodontic treatment, there are orthodontic requirements for a direction of disposing the functional component 10 disposed on the auxiliary device. Therefore, after cooperating with the shell-like dental appliance 3, the auxiliary device cannot generate a relative movement or rotation, thereby affecting an orthodontic effect. Therefore, a portion of the retaining component 20 passing through the shell-like dental appliance 3 is of a non-circular structure, and when the non-circular structure is engaged with the shell-like dental appliance 3, positions of the two are relatively stable and do not move or rotate. In addition, a height of the retaining component 20 passing through the shell-like dental appliance 3 is basically the same as a thickness of the shell-like dental appliance 3, which can play a role of auxiliary retaining.

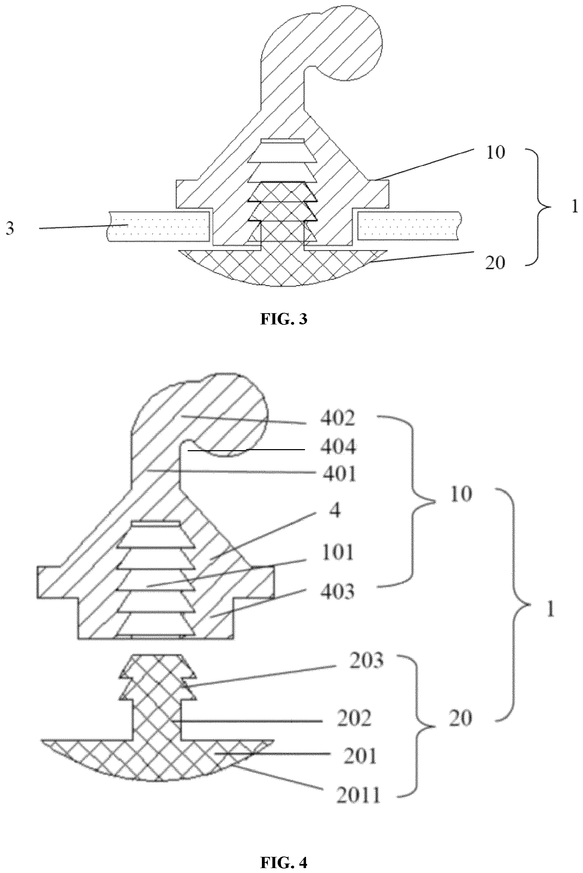

When the functional component 10 passes through the shell-like dental appliance 3 to be connected to the retaining component 20, referring to FIG. 3, specifically, a cross section of the functional component 10 passing through the shell-like dental appliance 3 is of a non-circular structure that prevents rotation relative to the shell-like dental appliance 3, and a cross section of the functional component 10 passing through the shell-like dental appliance 3 is matched with an opening on the shell-like dental appliance 3. For example, both are of a polygonal structure such as a rectangular structure or a triangular structure, or are of another structure for matching. When the auxiliary device is used for orthodontic treatment, there are orthodontic requirements for a direction of disposing the functional component 10 disposed on the auxiliary device. Therefore, after cooperating with the shell-like dental appliance 3, the auxiliary device cannot generate a relative movement or rotation, thereby affecting an orthodontic effect. Therefore, a portion of the functional component 10 passing through the shell-like dental appliance is of a non-circular structure, and when the non-circular structure is engaged with the shell-like dental appliance, positions of the two are relatively stable and do not move or rotate. In addition, a height of the functional component 10 passing through the shell-like dental appliance 3 is basically the same as a thickness of the shell-like dental appliance 3, which can play a role of auxiliary retaining.

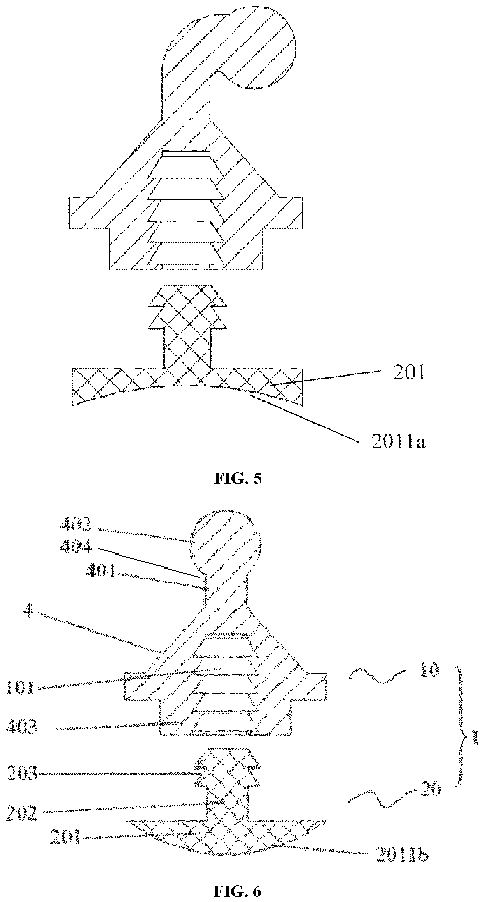

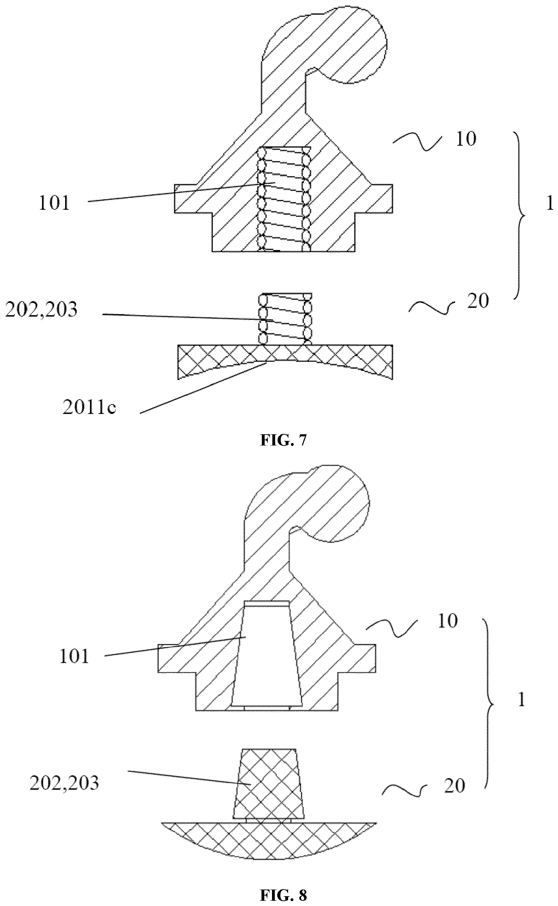

A morphology of the functional component 10 is related to clinical requirements, and a corresponding functional auxiliary orthodontic device may be selected according to clinical effects. In some embodiments, the functional component 10 is a functional portion with a traction function. The functional component 10 is disposed on a labial side surface of the shell-like dental appliance 3, and may provide a hooking function for intramaxillary traction and intermaxillary traction. Although not shown in the figures, with the auxiliary orthodontic device of the invention, a surface of the functional component 10 adjacent to the labial side of the shell-like dental appliance 3 is set as a curved surface consistent with a dental arch curve of the labial side. The surface of the functional component 10 adjacent to the labial side of the shell-like dental appliance 3 is closely attached to the dental arch curve of the labial side, thereby increasing the stability of the connection between the functional component 10 and the shell-like dental appliance 3. In addition, in some embodiments, the retaining component 20 has a fixing member 201 in contact with the teeth, and a surface 2011 of the fixing member 201 in contact with the teeth is set as a curved surface matching a tooth surface. Referring to FIG. 4 and FIG. 5, a direction of the surface 2011 is the same as or different from that of a curved surface of the tooth surface. More specifically, as shown in FIG. 5 and FIG. 7, surfaces 2011a and 2011c on a side of the fixing member 201 adjacent to the teeth are set as concave surfaces. Referring to FIG. 6, a surface 2011b of the fixing member 201 on the side adjacent to the teeth is set as a convex surface. A surface of the fixing member 201 that is adjacent to a lingual side and is in contact with the teeth is set to be consistent with the curved surface of the tooth surface. Accordingly, the fixing member 201 is in close contact with the tooth surface, so that the shell-like dental appliance 3 wraps the teeth more closely to ensure the orthodontic effect and reduce the discomfort caused by wearing. A first matching member 101 connected to the retaining component 20 is further disposed at a position of the functional component 10 adjacent to the labial side of the shell-like dental appliance 3. As shown in FIG. 4 to FIG. 8, the functional component 10 is connected to the retaining component 20 through the first matching member 101.

Referring to FIG. 4 still, the retaining component 20 includes a fixing member 201 and a connecting member 202, one end of the connecting member 202 is connected to the fixing member 201, and another end of the connecting member 202 is provided with a second matching member 203 connected to the first matching member 101. The second matching member 203 is engaged with the first matching member 101 to implement a connection between the functional component 10 and the retaining component 20, so that the functional component 10 is fixed on a labial side of the shell-like dental appliance 3. The first matching member 101 and the second matching member 203 are connected in a manner of a male-female matching connection. The male-female matching connection has advantages of a simple structure and a reliable connection. More specifically, the male-female matching connection is a threaded connection, an insert connection, a tenon-and-mortise connection, a magnetic attraction connection or an adhesion connection. The fixing member 201 has a coverage area larger than an interface of the shell-like dental appliance through which the fixing member 201 passes, and can play a fixing role when it engaged with the functional component 10.

As shown in FIG. 4, the functional component 10 is the traction member 4 including: a traction rod 401, a limiting member 402 and a base 403. The traction rod 401 is disposed between the limiting member 402 and the base 403, the base 403 is disposed adjacent to a labial side of the shell-like dental appliance 3, an end portion of the traction rod 401 connected to the base 403 is perpendicular to a tooth surface of labial side, the limiting member 402 is disposed at a free end of the traction rod 401, and the limiting member 402 forms a limiting slot 404 with the traction rod 401. The traction member 401 is engaged with a traction device to implement traction, the base 403 is adjacent to the shell-like dental appliance 3, so that the base 403 can provide support for the traction rod 401 on the base, and the end portion of the traction rod 401 is disposed perpendicular to the tooth surface of labial side, so that a traction force is perpendicular to the tooth surface of labial side, to avoid an unexpected movement caused by a tilt of the traction force. The limiting member 402 and the traction rod 401 form a limiting slot 404, and the limiting slot 404 may generate a hooking force for connecting to the traction device. The traction rod 401 is of a hook-like structure disposed at a specific angle with a tooth surface of labial side, the hook-like structure is disposed at a free end of the traction rod 401, and the limiting member 402 and the traction rod 401 form a limiting slot 404. To further strengthen a limiting effect, a spherical protrusion may be disposed at a free end of the limiting member 402, and a portion for connecting the traction rod 401 to the base 403 is set to be perpendicular to the tooth surface of labial side, and is configured to connect an intramaxillary traction device or an intermaxillary traction device, thereby generating a more stable hooking force. The traction rod 401 is of a hook-like structure disposed at a specific angle with the tooth surface of labial side, and when the traction rod is connected and fixed with the shell-like dental appliance 3, a direction of disposing the traction rod 401 of the hook-like structure cannot rotate relative to the shell-like dental appliance, or otherwise there is a deviation from an expected orthodontic effect. Therefore, when at least one of the functional component 10 and the retaining component 20 passes through the shell-like dental appliance 3, a cross section passing through the shell-like dental appliance 3 is of a non-circular structure that prevents rotation relative to the shell-like dental appliance 3, to prevent orthodontic errors caused by the relative rotation.

In some other embodiments, referring to FIG. 6, the traction rod 401 is a straight rod. That is, the traction rod is perpendicular to the tooth surface of labial side, and the limiting member 402 disposed on the traction rod may be a sphere with a diameter greater than a width of the free end of the traction rod 401, or the limiting member 402 may be of another structure, only if the limiting member may form the limiting slot 404 with the traction rod 401 for hooking. The structure of the limiting member 402 is not limited herein.

In addition, in some embodiments, as shown in FIG. 4 to FIG. 8, the first matching member 101 and the second matching member 203 are connected in a manner of a male-female matching connection. The male-female matching connection has advantages of a simple structure and a reliable connection. Specifically, the first matching member 101 and the second matching member 203 are of an insert structure.

In some embodiments, the first matching member 101 is of a concave structure, and the second matching member 203 is of a convex structure. During use, the second matching member 203 is inserted into the first matching member 101 to implement insert engagement.

In some other implementations, the first matching member 101 is of a concave structure, the second matching member 203 is of a convex structure, and a limiting insert structure engaged with an outer surface of the second matching member 101 is disposed on an inner surface of the first matching member 101. Referring to FIG. 6, for example, one or more vertically stacked trapezoid structures are disposed on the inner surface of the first matching member 101, and a width of an upper base of the trapezoid structure is less than a width of a lower base thereof. During mutual engagement, the second matching member 203 interacts with the first matching member 101, and a relative position does not change. That is, the second matching member 203 cannot slide out from inside of the first matching member 101.

In some other implementations, the first matching member 101 is of a concave structure, the second matching member 203 is of a convex structure, and the first matching member 101 and the second matching member 203 are of a threaded connection. Referring to FIG. 7, during actual use, the second matching member 203 is adapted, by using an external thread disposed on an outer surface of the second matching member, to an internal thread disposed inside the first matching member 101 to complete corresponding fixing. This connection manner is a detachable connection.

In some other implementations, the first matching member 101 is of a concave structure, the second matching member 203 is of a convex structure, and the first matching member 101 and the second matching member 203 are of a magnetic attraction. That is, a concave surface of the first matching member 101 and a convex surface of the second matching member 203 are of two magnetic pole structures with opposite magnetism. After the second matching member 203 is inserted into the first matching member 101, the two are attracted and connected to each other. This connection manner is a detachable connection. Referring to FIG. 8, the first matching member 101 is provided with a columnar trapezoidal concave structure, the second matching member 203 is provided with a columnar trapezoidal convex structure matching the columnar trapezoidal concave structure, and a length of an upper base of a trapezoid is less than a length of a lower base thereof. A concave surface of the first matching member 101 and a convex surface of the second matching member 203 are of two magnetic pole structures with opposite magnetism. After the second matching member 203 is inserted into the first matching member 101, the two are attracted and connected to each other.

In some other implementations, the first matching member 101 is of a concave structure, the second matching member 203 is of a convex structure, and the first matching member 101 and the second matching member 203 are of a tenon-and-mortise connection. That is, a concave surface of the first matching member 101 and a convex surface of the second matching member 203 are of two structures that are concave-convex matched, and the two are engaged with each other to complete fixing, which is similar to the engagement manner in FIG. 8.

In some other implementations, the first matching member 101 is of a concave structure, and the second matching member 203 is of a convex structure, which is not limited herein, and the two may be of other structures as long as such structures can be engaged with each other and thus fixed. Alternatively, the first matching member 101 is of a convex structure, and the second matching member 203 is of a concave structure, which is not limited herein, and the two may be of other structures as long as such structures can be engaged with each other and thus fixed.

"Posterior region" is defined according to a classification of teeth in the 2nd edition of "Introduction of Stomatology" published by the Peking University Medical Press on pages 36 to 38, and includes premolars and molars, teeth 4 to 8 are shown by using a foreign direct investment (FDI) marking method, and teeth 1 to 3 are shown by using the FDI marking method in an anterior region. In some embodiments, the functional component 10 connected on the shell-like dental appliance 3 may be only disposed in a premolar region, or may be only disposed in a molar region, or may be partially disposed in a premolar region and a molar region, or may be disposed in a part region of a premolar region and a molar region, or may be both disposed in a premolar region and a molar region.

The foregoing auxiliary orthodontic device for a shell-like dental appliance 3 is provided with a functional component 10 and a retaining component 20, here the functional component 10 is set to have a corresponding auxiliary orthodontic function, and the retaining component 20 is set to have an effect of retaining the auxiliary orthodontic device and the shell-like dental appliance 3. The retaining component 20 passes through the shell-like dental appliance 3 to be connected to the functional component 10, or the functional component 10 passes through the shell-like dental appliance 3 to be connected to the retaining component 20. Such a separated connection manner enables that cooperation between the auxiliary orthodontic device and the shell-like dental appliance 3 is more stable, that is, the shell-like dental appliance 3 is partially inserted into the auxiliary device, so that a connection between the two is stable. When engaged with the shell-like dental appliance 3 in use, the auxiliary orthodontic device can achieve the auxiliary orthodontic function more precisely without affecting an area of corresponding tooth wrapped by the shell-like dental appliance 3, and further affecting an overall orthodontic effect of the shell-like dental appliance 3. When being disposed on the shell-like dental appliance 3 to achieve the corresponding auxiliary orthodontic function, the auxiliary orthodontic device performs orthodontic treatment by using an overall force of the overall shell-like dental appliance 3 and the corresponding tooth, to implement the orthodontic treatment of overall dentition, and it avoids that the auxiliary orthodontic device is disposed on a single teeth, resulting in an unexpected orthodontic effect on an action of the single teeth. The auxiliary orthodontic device may be prepared through pre-forming, and is applicable to large-scale production, and a corresponding auxiliary orthodontic function is added according to orthodontic requirements, to avoid errors caused by a manual operation to affect the orthodontic effect. In addition, the auxiliary orthodontic device is made of a material that can be applied in a mouth, and is engaged with the shell-like dental appliance 3 by physical connection. This cannot cause uncertainty in use by a change of a material characteristic due to reprocessing.

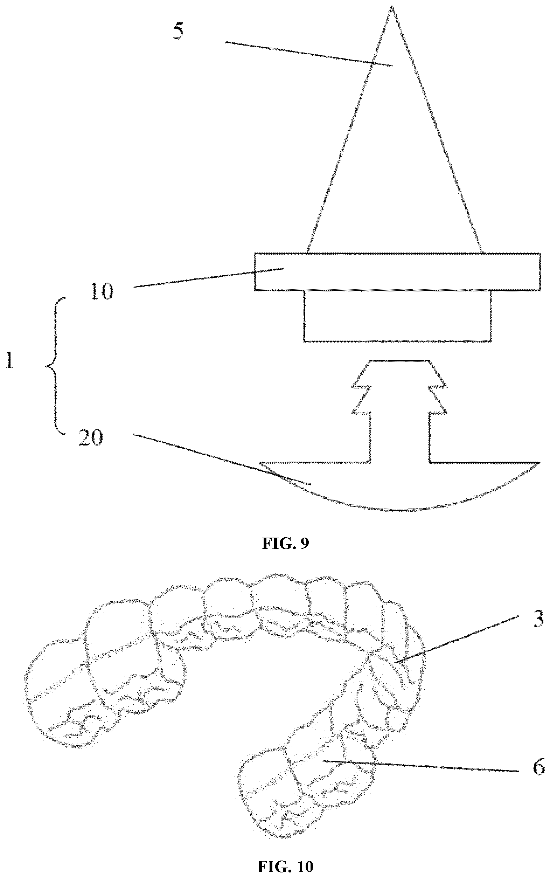

In addition, in some embodiments, referring to FIG. 9, in an alternative manner, the functional component 10 may alternatively be a tongue crib 5 for improving tongue habits. When the functional component 10 is the tongue crib 5 for improving tongue habits, the functional component 10 is disposed on a lingual side surface of the shell-like dental appliance 3; and remaining structures may be the same as the structures described in any implementation described above. Details are not described herein again.

In addition, in some embodiments, in an alternative manner, the functional component 10 may alternatively be a component for opening occlusion. Specifically, as shown in FIG. 10, the functional component may be a jaw pad component 6 for opening occlusion or a flat guide component for opening occlusion, which may be disposed in the posterior region or the anterior region of the shell-like dental appliance 3. In some embodiments, the jaw pad component 6 is disposed in the posterior region of the shell-like dental appliance 3, and remaining structures may be the same as the structures described in any implementation described above. Details are not described herein again. For a specific manner of cooperating the jaw pad component 6 with the shell-like dental appliance body, refer to Fig. 10.

In addition, some embodiments of the present disclosure further provide a shell-like dental appliance, including: a shell-like dental appliance body and the auxiliary orthodontic device for a shell-like dental appliance 3 in any of the foregoing embodiments. The auxiliary orthodontic device includes a functional component 10 and a retaining component 20 provided separately from the functional component, here the retaining component 20 is connected to the functional component 10, at least one of the functional component 10 and the retaining component 20 passes through a shell-like dental appliance 3, the functional component 10 is retained on the shell-like dental appliance 3, and the functional component 10 is disposed on an outer surface of the shell-like dental appliance 3. During tooth orthodontic treatment, the auxiliary orthodontic device for a shell-like dental appliance is disposed on a labial surface or a lingual surface of the shell-like dental appliance 3 to achieve a corresponding auxiliary orthodontic function. For example, a traction member with a hooking function, a tongue crib for improving tongue habits or a component for opening occlusion completes the corresponding auxiliary orthodontic function. Specifically, when being the traction member 4, as shown in FIG. 4 to FIG. 8, the auxiliary orthodontic device may perform intramaxillary traction or intermaxillary traction; when being the tongue crib 5, as shown in FIG. 9, the auxiliary orthodontic device may improve patient's tongue habits to prevent a tongue from licking a disposition position; and when being a component for opening occlusion, and being specifically a jaw pad component 6 or a flat guide component, as shown in FIG. 10, the auxiliary orthodontic device may open relative occlusion of patient's upper and lower jaws to perform occlusal reconstruction of the upper and lower jaws.

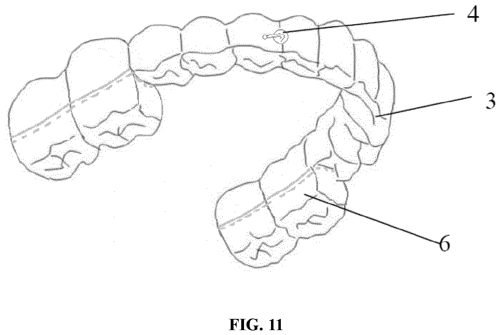

In addition, in some implementations, referring to FIG. 11, the auxiliary orthodontic device has both the traction member 4 and the jaw pad component 6, and may open occlusion and perform both intramaxillary traction or intermaxillary traction.

Some embodiments of the present disclosure further provide a tooth orthodontic system, including: a plurality of orthodontic appliances, here at least one of the orthodontic appliances is the shell-like dental appliance 3 described above. As the orthodontic process progresses, the auxiliary orthodontic device disposed on the shell-like dental appliance 3 gradually changes from an initial position to an orthodontic target position, and the auxiliary orthodontic device may be transformed in shape, size and position according to actual orthodontic requirements, or may be replaced with different auxiliary orthodontic devices according to actual orthodontic requirements, to achieve the expected orthodontic effect.

It should be noted that the embodiments may all be freely combined according to requirements. The foregoing descriptions are some implementations of the present disclosure. The protection scope of the present invention is defined by the appended claims.

## Claims

1. An auxiliary orthodontic device for a shell-like dental appliance, comprising:
a functional component (10), and
a retaining component (20) provided separately from the functional component (10);
the retaining component (20) is connectable to the functional component (10);
wherein when the auxiliary orthodontic device is engaged with said shell-like dental appliance, at least one of the functional component (10) and the retaining component (20) passes through the shell-like dental appliance (3), the functional component (10) is retained on the shell-like dental appliance (3), and the functional component (10) is provided on an outer surface of the shell-like dental appliance (3),
wherein the functional component (10) is a traction member (4) with a hooking function,
**characterized in that**,
a surface of the functional component (10), adjacent to a labial side of the shell-like dental appliance (3) when assembled, is a curved surface consistent with a dental arch curve of the labial side of the shell-like dental appliance (3).

2. The auxiliary orthodontic device for a shell-like dental appliance according to claim 1, wherein the traction member (4) comprises a traction rod (401), a limiting member (402) and a base (403);
wherein the traction rod (401) is disposed between the limiting member (402) and the base (403), the base (403) is to be disposed adjacent to a labial side of the shell-like dental appliance (3);
wherein in use an end portion of the traction rod (401) connected to the base (403) is perpendicular to a surface of labial side tooth; and
one end of the traction rod (401) away from the base (403) is a free end, and the limiting member (402) is disposed at the free end of the traction rod (401), and forms a limiting slot (404) with the traction rod (401).

3. The auxiliary orthodontic device for a shell-like dental appliance according to claim 2, wherein the traction rod (401) is of a hook-like structure disposed at a specific angle, an end of the base (403) connected to the traction rod (401) is a connection end, the connection end between the traction rod (401) and the base (403) is perpendicular to the surface of labial side tooth, and the free end of the traction rod (401) is disposed at a specific angle with the surface of labial side tooth.

4. The auxiliary orthodontic device for a shell-like dental appliance according to any one of claims 1 to 3, wherein a first matching member (101) connectable to the retaining component (20) is further disposed at a position of the functional component (10) so as to be adjacent to the labial side of the shell-like dental appliance (3) when assembled.

5. The auxiliary orthodontic device for a shell-like dental appliance according to claim 4, wherein the retaining component (20) comprises a fixing member (201) and a connecting member (202), one end of the connecting member (202) is connected to the fixing member (201), and another end of the connecting member (202) is provided with a second matching member (203) connected to the first matching member (101).

6. The auxiliary orthodontic device for a shell-like dental appliance according to claim 5, wherein the fixing member (201) has a curved surface matching a tooth surface and in use being in contact with the teeth.

7. The auxiliary orthodontic device for a shell-like dental appliance according to claim 5, wherein the first matching member (101) and the second matching member (203) are connected in a manner of a male-female matching connection.

8. The auxiliary orthodontic device for a shell-like dental appliance according to claim 7, wherein the male-female matching connection is a threaded connection, an insert connection, a tenon-and-mortise connection, a magnetic attraction connection or an adhesion connection.

9. The auxiliary orthodontic device for a shell-like dental appliance according to claim 1, wherein when the functional component (10) is a component for opening occlusion, the component for opening occlusion is a jaw pad component or a flat guide component.

10. The auxiliary orthodontic device for a shell-like dental appliance according to any one of claims 1 to 9, wherein a cross section of the retaining component (20) passing through the shell-like dental appliance (3) is of a non-circular structure that prevents rotation relative to the shell-like dental appliance (3), and the cross section of the retaining component (20) passing through the shell-like dental appliance (3) is matched with an opening provided on the shell-like dental appliance (3); or
a cross section of the functional component (10) passing through the shell-like dental appliance (3) is of a non-circular structure that prevents rotation relative to the shell-like dental appliance (3), and the cross section of the functional component (10) passing through the shell-like dental appliance (3) is matched with an opening provided on the shell-like dental appliance (3).

11. A shell-like dental appliance, comprising: a shell-like dental appliance body and the auxiliary orthodontic device for a shell-like dental appliance according to any one of claims 1 to 10.

12. A tooth orthodontic system, comprising: a plurality of orthodontic appliances, wherein at least one of the orthodontic appliances is the shell-like dental appliance according to claim 11.

## Patentansprüche

1. Kieferorthopädische Hilfsvorrichtung für ein schalenartiges Dentalgerät, die Folgendes umfasst:
eine Funktionskomponente (10), und
eine Haltekomponente (20), die separat von der Funktionskomponente (10) bereitgestellt ist;
die Haltekomponente (20) ist mit der Funktionskomponente (10) verbindbar;
wobei, wenn die kieferorthopädische Hilfsvorrichtung mit dem schalenartigen Dentalgerät im Eingriff ist, mindestens eine der Funktionskomponente (10) und der Haltekomponente (20) durch das schalenartige Dentalgerät (3) verläuft, die Funktionskomponente (10) am schalenartigen Dentalgerät (3) gehalten wird und die Funktionskomponente (10) an der Außenfläche des schalenartigen Dentalgeräts (3) bereitgestellt ist,
wobei die Funktionskomponente (10) ein Traktionselement (4) mit einer Einhakungsfunktion ist,
**dadurch gekennzeichnet, dass**,
eine Fläche der Funktionskomponente (10) neben einer labialen Seite des schalenartigen Dentalgeräts (3), wenn montiert, eine gekrümmte Fläche ist, die mit einer Dentalbogenkurve der labialen Seite des schalenartigen Dentalgeräts (3) konsistent ist.

2. Kieferorthopädische Hilfsvorrichtung für ein schalenartiges Dentalgerät nach Anspruch 1, wobei das Traktionselement (4) einen Traktionsstab (401), ein Begrenzungselement (402) und eine Basis (403) umfasst;
wobei der Traktionsstab (401) zwischen dem Begrenzungselement (402) und der Basis (403) angeordnet ist, die Basis (403) neben einer labialen Seite des schalenartigen Dentalgeräts (3) anzuordnen ist;
wobei im Gebrauch ein Endabschnitt des Traktionsstabs (401), der mit der Basis (403) verbunden ist, senkrecht zu einer Fläche eines Zahns auf der labialen Seite verläuft; und
ein Ende des Traktionsstabs (401), das von der Basis (403) entfernt ist, ist ein freies Ende und das Begrenzungselement (402) ist am freien Ende des Traktionsstabs (401) angeordnet und bildet mit dem Traktionsstab (401) einen Begrenzungsschlitz (404).

3. Kieferorthopädische Hilfsvorrichtung für ein schalenartiges Dentalgerät nach Anspruch 2, wobei der Traktionsstab (401) eine hakenartige Struktur aufweist, die in einem spezifischen Winkel angeordnet ist, ein Ende der Basis (403), das mit dem Traktionsstab (401) verbunden ist, ein Verbindungsende ist, das Verbindungsende zwischen dem Traktionsstab (401) und der Basis (403) senkrecht zur Fläche des Zahns auf der labialen Seite verläuft und das freie Ende des Traktionsstaubs (401) in einem spezifischen Winkel zur Fläche des Zahns auf der labialen Seite angeordnet ist.

4. Kieferorthopädische Hilfsvorrichtung für ein schalenartiges Dentalgerät nach einem der Ansprüche 1 bis 3, wobei ferner in einer Position der Funktionskomponente (10) ein erstes Anpassungselement (101) angeordnet ist, das mit der Haltekomponente (20) verbindbar ist, um der labialen Seite des schalenartigen Dentalgeräts (3), wenn es montiert ist, benachbart zu sein.

5. Kieferorthopädische Hilfsvorrichtung für ein schalenartiges Dentalgerät nach Anspruch 4, wobei die Haltekomponente (20) ein Befestigungselement (201) und ein Verbindungselement (202) umfasst, ein Ende des Verbindungselements (202) mit dem Befestigungselement (201) verbunden ist und ein anderes Ende des Verbindungselements (202) mit einem zweiten Anpassungselement (203) versehen ist, das mit dem ersten Anpassungselement (101) verbunden ist.

6. Kieferorthopädische Hilfsvorrichtung für ein schalenartiges Dentalgerät nach Anspruch 5, wobei das Befestigungselement (201) eine gekrümmte Fläche aufweist, die an eine Zahnfläche angepasst und im Gebrauch mit den Zähnen in Berührung ist.

7. Kieferorthopädische Hilfsvorrichtung für ein schalenartiges Dentalgerät nach Anspruch 5, wobei das erste Anpassungselement (101) und das zweite Anpassungselement (203) in einer Weise einer Stecker-Buchse-Anpassungsverbindung verbunden sind.

8. Kieferorthopädische Hilfsvorrichtung für ein schalenartiges Dentalgerät nach Anspruch 7, wobei die Stecker-Buchse-Anpassungsverbindung eine Gewindeverbindung, eine Einsteckverbindung, eine Zapfenverbindung, eine magnetische Anzugsverbindung oder eine Haftungsverbindung ist.

9. Kieferorthopädische Hilfsvorrichtung für ein schalenartiges Dentalgerät nach Anspruch 1, wobei, wenn die Funktionskomponente (10) eine Komponente zum Öffnen eines Verschlusses ist, die Komponente zum Öffnen eines Verschlusses eine Kieferpolsterkomponente oder eine flache Führungskomponente ist.

10. Kieferorthopädische Hilfsvorrichtung für ein schalenartiges Dentalgerät nach einem der Ansprüche 1 bis 9, wobei ein Querschnitt der Haltekomponente (20), die durch das schalenartige Dentalgerät (3) verläuft, eine nicht kreisförmige Struktur aufweist, die eine Drehung relativ zum schalenartigen Dentalgerät (3) verhindert, und der Querschnitt der Haltekomponente (20), die durch das schalenartige Dentalgerät (3) verläuft, an eine Öffnung angepasst ist, die am schalenartigen Dentalgerät (3) vorgesehen ist; oder
ein Querschnitt der Funktionskomponente (10), die durch das schalenartige Dentalgerät (3) verläuft, eine nicht kreisförmige Struktur aufweist, die eine Drehung relativ zum schalenartigen Dentalgerät (3) verhindert, und der Querschnitt der Funktionskomponente (10), die durch das schalenartige Dentalgerät (3) verläuft, an eine Öffnung angepasst ist, die am schalenartigen Dentalgerät (3) vorgesehen ist.

11. Schalenartiges Dentalgerät, das Folgendes umfasst: einen schalenartigen Dentalgerätekörper und die kieferorthopädische Hilfsvorrichtung für ein schalenartiges Dentalgerät nach einem der Ansprüche 1 bis 10.

12. Kieferorthopädisches Zahnsystem, das Folgendes umfasst: eine Vielzahl von kieferorthopädischen Geräten, wobei mindestens eines das kieferorthopädische Gerät das schalenartige Dentalgerät nach Anspruch 11 ist.

## Revendications

1. Dispositif orthodontique auxiliaire pour un appareil dentaire de type coque, comprenant :
un composant fonctionnel (10), et
un composant de retenue (20) fourni séparément du composant fonctionnel (10) ;
le composant de retenue (20) peut être raccordé au composant fonctionnel (10) ;
dans lequel lorsque le dispositif orthodontique auxiliaire est mis en prise avec ledit appareil dentaire de type coque, au moins l'un parmi le composant fonctionnel (10) et le composant de retenue (20) passe à travers l'appareil dentaire de type coque (3), le composant fonctionnel (10) est retenu sur l'appareil dentaire de type coque (3) et le composant fonctionnel (10) est prévu sur une surface externe de l'appareil dentaire de type coque (3),
dans lequel le composant fonctionnel (10) est un élément de traction (4) avec une fonction d'accrochage,
**caractérisé en ce que** :
une surface du composant fonctionnel (10), adjacente à un côté labial de l'appareil dentaire de type coque (3), lorsqu'il est assemblé, est une surface courbée compatible avec une courbe d'arcade dentaire du côté labial de l'appareil dentaire de type coque (3).

2. Dispositif orthodontique auxiliaire pour un appareil dentaire de type coque selon la revendication 1, dans lequel l'élément de traction (4) comprend une tige de traction (401), un élément de limitation (402) et une base (403) ;
dans lequel la tige de traction (401) est disposée entre l'élément de limitation (402) et la base (403), la base (403) doit être disposée adjacente à un côté labial de l'appareil dentaire de type coque (3) ;
dans lequel, à l'usage, une partie d'extrémité de la tige de traction (401) raccordée à la base (403) est perpendiculaire à une surface d'une dent du côté labial ; et
une extrémité de la tige de traction (401) à l'opposé de la base (403) est une extrémité libre, et l'élément de limitation (402) est disposé au niveau de l'extrémité libre de la tige de traction (401), et forme une fente de limitation (404) avec la tige de traction (401).

3. Dispositif orthodontique auxiliaire pour un appareil dentaire de type coque selon la revendication 2, dans lequel la tige de traction (401) a une structure en forme de crochet disposée à un angle spécifique, une extrémité de la base (403) raccordée à la tige de traction (401) est une extrémité de raccordement, l'extrémité de raccordement entre la tige de traction (401) et la base (403) est perpendiculaire à la surface d'une dent du côté labial, et l'extrémité libre de la tige de traction (401) est disposée à un angle spécifique avec la surface d'une dent du côté labial.

4. Dispositif orthodontique auxiliaire pour un appareil dentaire de type coque selon l'une quelconque des revendications 1 à 3, dans lequel un premier élément correspondant (101) pouvant être raccordé au composant de retenue (20) est en outre disposé dans une position du composant fonctionnel (10) afin d'être adjacent au côté labial de l'appareil dentaire de type coque (3), lorsqu'il est assemblé.

5. Dispositif orthodontique auxiliaire pour un appareil dentaire de type coque selon la revendication 4, dans lequel le composant de retenue (20) comprend un élément de fixation (201) et un élément de raccordement (202), une extrémité de l'élément de raccordement (202) est raccordée à l'élément de fixation (201), et une autre extrémité de l'élément de raccordement (202) est prévue avec un second élément correspondant (203) raccordé au premier élément correspondant (101).

6. Dispositif orthodontique auxiliaire pour un appareil dentaire de type coque selon la revendication 5, dans lequel l'élément de fixation (201) a une surface courbée correspondant à une surface de dent et à l'usage, étant en contact avec les dents.

7. Dispositif orthodontique auxiliaire pour un appareil dentaire de type coque selon la revendication 5, dans lequel le premier élément correspondant (101) et le second élément correspondant (203) sont raccordés à la manière d'un raccordement correspondant mâle-femelle.

8. Dispositif orthodontique auxiliaire pour un appareil dentaire de type coque selon la revendication 7, dans lequel le raccordement correspondant mâle-femelle est un raccordement fileté, un raccordement par insert, un raccordement à tenon et mortaise, un raccordement par attraction magnétique ou un raccordement par adhérence.

9. Dispositif orthodontique auxiliaire pour un appareil dentaire de type coque selon la revendication 1, dans lequel lorsque le composant fonctionnel (10) est un composant pour ouvrir l'occlusion, le composant pour ouvrir l'occlusion est un composant de coussin de mâchoire ou un composant de guide plat.

10. Dispositif orthodontique auxiliaire pour un appareil dentaire de type coque selon l'une quelconque des revendications 1 à 9, dans lequel une section transversale du composant de retenue (20) traversant l'appareil dentaire de type coque (3) a une structure non circulaire qui empêche la rotation par rapport à l'appareil dentaire de type coque (3) et la section transversale du composant de retenue (20) traversant l'appareil dentaire de type coque (3) correspond à une ouverture prévue sur l'appareil dentaire de type coque (3) ; ou bien
une section transversale du composant fonctionnel (10) traversant l'appareil dentaire de type coque (3) a une structure non circulaire qui empêche la rotation par rapport à l'appareil dentaire de type coque (3) et la section transversale du composant fonctionnel (10) traversant l'appareil dentaire de type coque (3) correspond à une ouverture prévue sur l'appareil dentaire de type coque (3).

11. Appareil dentaire de type coque comprenant : un corps d'appareil dentaire de type coque et le dispositif orthodontique auxiliaire pour un appareil dentaire de type coque selon l'une quelconque des revendications 1 à 10.

12. Système orthodontique dentaire comprenant : une pluralité d'appareils orthodontiques, dans lequel au moins l'un des appareils orthodontiques est l'appareil dentaire de type coque selon la revendication 11.
